# EUROPEAN PATENT SPECIFICATION

(11) **EP 2 331 620 B1**
(45) Date of publication and mention of the grant of the patent: **15.08.2012**
(21) Application number: 09788086.8
(22) Date of filing: 18.09.2009
(51) Int. Cl.: C08K 5/00, C08K 5/19, C08K 5/21, C08L 27/16, C08K 5/18

(54) **CURABLE COMPOSITION AND MOLDED ARTICLE MADE OF SAME**
HÄRTBARE ZUSAMMENSETZUNG UND FORMKÖRPER DARAUS
COMPOSITION DURCISSABLE ET ARTICLE MOULÉ FABRIQUÉ À PARTIR DE CELLE-CI

(30) Priority: 25.09.2008 US 100209 P
(43) Date of publication of application: 15.06.2011
(73) Proprietor: Daikin Industries, Ltd., Osaka 530-8323 (JP)
(72) Inventor: WASHINO, Keiko, Settsu-shi Osaka 566-8585 (JP); FUKUOKA, Shoji, Settsu-shi Osaka 566-8585 (JP); OTA, Daisuke, Settsu-shi Osaka 566-8585 (JP); KISHINE, Mitsuru, Orangeburg, New York 10962 (US)
(74) Representative: HOFFMANN EITLE
(86) International application number: PCT/JP2009/066869
(87) International publication number: WO 2010/035854

(56) References cited:
- EP-A- 1 741 748
- EP-A- 1 942 138
- US-A1- 2005 038 165
- US-B1- 6 281 296

## Description

### CROSS-REFERENCE TO RELATED APPLICATION

This application claims benefit under 35 U.S.C. § 119(e) of U.S. Provisional Application No. 61/100,209 filed on September 25, 2008, incorporated herein by reference in its entirety.

### TECHNICAL FIELD

The present invention relates to a curable composition comprising a specific vinylidene fluoride type elastomer. The present invention further relates to a molded article obtained by curing this curable composition.

### BACKGROUND ART

Fluorine-containing elastomers are molded into O-ring, hose, stem seal, shaft seal, diaphragm, etc., and are widely used in the fields of automobile industry, semiconductor industry and chemical industry because of their superior heat resistance, chemical resistance, solvent resistance and fuel oil resistance.

However, with advances in technologies, more rigorous demand for characteristics has been imposed, and in the fields of aviation and space industries, semiconductor manufacturing equipment, chemical plant and automobile industry, sealing property under higher temperature environment of more than 200°C is demanded.

Perfluoroelastomers are known as a fluorine-containing elastomer having such performance as mentioned above (JP2004-500459A, JP2003-531222A, WO 00/09603, JP11-111081A and WO 98/23675), and investigation has been made using vinylidene fluoride type elastomer comprising more than 20 % by mole of vinylidene fluoride (WO 05/105917 and WO 2007/049469).

### DISCLOSURE OF INVENTION

In order to obtain heat resistance at high temperature, oxazole crosslinking system and imidazole crosslinking system are advantageous, and as a result of further studies by the inventors of the present invention, it was found that to their surprise, a crosslinking speed in addition to heat resistance can be greatly improved at low cost by combination use of a specific curing agent with a specific compound as compared with a single use of a specific curing agent.

It is an object of the present invention to provide a curable composition of a vinylidene fluoride type elastomer having a crosslinking speed greatly improved by combination use of a specific curing agent with a compound generating ammonia such as urea or ammonium salt, and a molded article obtained from the curable composition.

Namely, the present invention relates to a curable composition comprising:
(A) a vinylidene fluoride type elastomer which is a copolymer of vinylidene fluoride (a1), at least one perfluoroolefin (a2) selected from the group consisting of tetrafluoroethylene, hexafluoropropylene and perfluoro(alkyl vinyl ether) and a cyano group-containing monomer (a3) (a proportion of the vinylidene fluoride exceeds 20 % by mole), (B) at least one curing agent selected from the group consisting of a compound having at least two crosslinkable reaction groups represented by the formula (1): 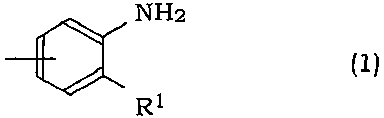 wherein R¹s are the same or different and each is -NH₂, -NHR², -OH or -SH; R² is a fluorine atom or a monovalent organic group,
   a compound represented by the formula (2): 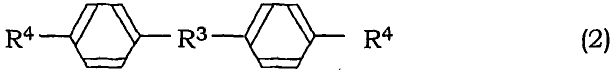 wherein R³ is -SO₂-, -O-, -CO-, an alkylene group having 1 to 6 carbon atoms, a perfluoroalkylene group having 1 to 10 carbon atoms or a single bond; R⁴ is 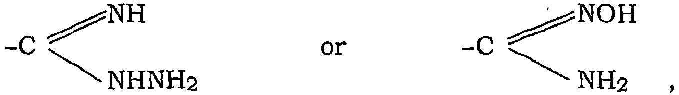 a compound represented by the formula (3): 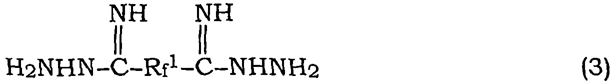 in which R_{f}¹ is a perfluoroalkylene group having 1 to 10 carbon atoms, and a compound represented by the formula (4): 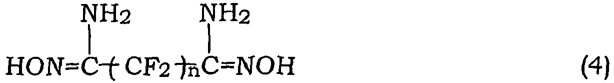 in which n is an integer of 1 to 10, and (C) a compound generating ammonia at 40° to 330°C.

The compound (C) generating ammonia is preferably urea or an ammonium salt from the viewpoint of satisfactory crosslinking speed.

The present invention also relates to a molded article obtained by curing the curable composition of the present invention. The molded article is suitable for a sealing material for an oxygen sensor, a sealing material for a fuel-air ratio sensor, a turbo-charger hose or a hose for control of exhaust gas recirculation combustion equipment (EGR), in which higher crosslinking speed and heat resistance are required.

Further, the present invention relates to a process for preparing a curable composition comprising the above-mentioned specific vinylidene fluoride type elastomer (A), the specific curing agent (B), and the compound (C) generating ammonia, and the process is characterized in that the compound (C) generating ammonia is mixed with the other components in the presence of a solvent (E) having affinity for the compound (C) generating ammonia, for example, water or an organic solvent having affinity for the compound (C) generating ammonia.

### BEST MODE FOR CARRYING OUT THE INVENTION

In the curable composition of the present invention, the specific curing agent (B) and the compound (C) generating ammonia are blended to the specific vinylidene fluoride type elastomer (A).

Each component is then explained below.

### (A) Specific vinylidene fluoride (VdF) type elastomer

The specific VdF type elastomer (A) is a VdF type elastomer which is a copolymer of the vinylidene fluoride (VdF) (a1), at least one perfluoroolefin (a2) selected from the group consisting of tetrafluoroethylene (TFE), hexafluoropropylene (HFP) and perfluoro(alkyl vinyl ether) (PAVE) and the cyano group-containing monomer (a3).

It is important that the proportion of VdF exceeds 20 % by mole in order to make improvement in brittleness at low temperature.

It is possible to use, as perfluoro(alkyl vinyl ether) (PAVE), one of or a combination of two or more of compounds represented by the general formula (24):

CF₂=CFO(CF₂CFY²O)ₚ-(CF₂CF₂CF₂O)_{q}-Rf³ (24)

wherein Y² is a fluorine atom or -CF₃; R_{f}³ is a perfluoroalkyl group having 1 to 5 carbon atoms; p is 0 or an integer of 1 to 5; q is 0 or an integer of 1 to 5, or the general formula (25):

CFX=CXOCF₂OR (25)

wherein X is F or H; R is a linear or branched C1 to C6 fluorooxyalkyl group, a cyclic C5 to C6 fluoroalkyl group or fluorooxyalkyl group and may have 1 to 2 atoms selected from H, Cl, Br and I.

Among those represented by the general formula (24) and the general formula (25), perfluoro(methyl vinyl ether) and perfluoro(propyl vinyl ether) are preferred, and especially perfluoro(methyl vinyl ether) is preferred.

These can be used alone or can be used in optional combination thereof.

With respect to the proportions of the VdF (a1) and the specific perfluoroolefin (a2), the proportion of VdF should exceed 20 % by mole. Particularly, the fluorine-containing elastomer comprising 45 to 85 % by mole of the VdF and 55 to 15 % by mole of the specific perfluoroolefin is preferred, and the fluorine-containing elastomer comprising 50 to 80 % by mole of the VdF and 50 to 20 % by mole of the specific perfluoroolefin is further preferred.

Preferred examples of a combination of the VdF (a1) and the specific perfluoroolefin (a2) are VdF/HFP copolymer, VdF/HFP/TFE copolymer, VdF/PAVE copolymer, VdF/TFE/PAVE copolymer, VdF/HFP/PAVE copolymer, and VdF/HFP/TFE/PAVE copolymer.

In the VdF/HFP copolymer, a ratio of VdF/HFP is preferably 45 to 85/55 to 15 in molar percent, more preferably 50 to 80/50 to 20 in molar percent, further preferably 60 to 80/40 to 20 in molar percent.

Preferred VdF/HFP/TFE copolymer is one comprising VdF/HFP/TFE in a ratio of 40 to 80/10 to 35/10 to 35 in molar percent.

Preferred VdF/PAVE copolymer is one comprising VdF/PAVE in a ratio of 65 to 90/35 to 10 in molar percent.

Preferred VdF/TFE/PAVE copolymer is one comprising VdF/TFE/PAVE in a ratio of 40 to 80/3 to 40/15 to 35 in molar percent.

Preferred VdF/HFP/PAVE copolymer is one comprising VdF/HFP/PAVE in a ratio of 65 to 90/3 to 25/3 to 25 in molar percent.

Preferred VdF/HFP/TFE/PAVE copolymer is one comprising VdF/HFP/TFE/PAVE in a ratio of 40 to 90/0 to 25/0 to 40/3 to 35 in molar percent, more preferably one comprising VdF/HFP/TFE/PAVE in a ratio of 40 to 80/3 to 25/3 to 40/3 to 25 in molar percent.

From the viewpoint of satisfactory crosslinking characteristics and heat resistance, the amount of cyano group-containing monomer (a3) is preferably 0.1 to 5 % by mole, more preferably 0.3 to 3 % by mole based on the total amount of VdF (a1) and specific perfluoroolefin (a2).

Examples of the cyano group-containing monomer (a3) are, for instance, monomers represented by the formulas (5) to (21):

CY¹₂=CY¹(CF₂)ₙ-CN (5)

where Y¹ is hydrogen atom or fluorine atom, n is an integer of 1 to 8,

CF₂=CFCF₂R_{f}²-CN (6)

where R_{f}² is (̵OCF₂)̵ₙ or (̵OCF(CF₃))̵ₙ, n is 0 or an integer of 1 to 5,

CF₂=CFCF₂(OCF(CF₃)CF₂)ₘ(OCH₂CF₂CF₂)ₙOCH₂CF₂-CN (7)

where m is 0 or an integer of 1 to 5, n is 0 or an integer of 1 to 5,

CF₂=CFCF₂(OCH₂CF₂CF₂)m(OCF(CF3)CF2)nOCF(CF3)-CN (8)

where m is 0 or an integer of 1 to 5, n is 0 or an integer of 1 to 5,

CF₂=CF(OCF₂CF(CF₃))ₘO(CF₂)ₙ-CN (9)

where m is 0 or an integer of 1 to 5, n is an integer of 1 to 8,

CF₂=CF(OCF₂CF(CF₃))ₘ-CN (10)

where m is an integer of 1 to 5,

CF₂=CFOCF₂(CF(CF₃)OCF₂)ₙCF(-CN)CF₃ (11)

where n is an integer of 1 to 4,

CF₂=CFO(CF₂)ₙOCF(CF₃)-CN (12)

where n is an integer of 2 to 5,

CF₂=CFO(CF₂)ₙ-(C₆H₄)-CN (13)

where n is an integer of 1 to 6,

CF₂=CF(OCF₂CF(CF₃))ₙOCF₂CF(CF₃)-CN (14)

where n is an integer of 1 to 2,

CH₂=CFCF₂O(CF(CF₃)CF₂O)ₙCF(CF₃)-CN (15)

where n is 0 or an integer of 1 to 5,

CF₂=CFO(CF₂CF(CF₃)O)ₘ(CF₂)ₙ-CN (16)

where m is 0 or an integer of 1 to 5, n is an integer of 1 to 3,

CH₂=CFCF₂OCF(CF₃)OCF(CF₃)-CN (17)

CH₂=CFCF₂OCH₂CF₂-CN (18)

CF₂=CFO(CF₂CF(CF₃)O)ₘCF₂CF(CF₃)-CN (19)

where m is an integer of not less than 0,

CF₂=CFOCF(CF₃)CF₂O(CF₂)ₙ-CN (20)

where n is an integer of not less than 1, and

CF₂=CFOCF₂OCF₂CF(CF₃)OCF₂-CN (21),

and these can be used alone or can be used in an optional combination thereof.

Among these, the formula (9) or (16) is preferred from the viewpoint of satisfactory copolymerizability and vulcanizability, and CF₂=CFOCF₂CF(CF₃)OCF₂CF₂CN and CF₂=CFO(CF₂)₅CN are more preferred.

In the cyano group-containing monomers represented by the formulas (5) to (21), triazine crosslinking proceeds by a cyclic trimerization reaction of the cyano group thereof.

These VdF type elastomers can be prepared by known methods.

For introducing a cyano group, the method described in WO 00/05959 can also be used.

The VdF type elastomer used in the present invention is preferably one having a Mooney viscosity (ML₁₊₁₀(121°C)) of 5 to 140, further 10 to 120, especially 20 to 100 from the viewpoint of satisfactory processability.

### (B) Curing agent

The curing agent used in the present invention is at least one curing agent selected from the group consisting of:
a bisdiaminophenyl compound, bisaminophenol compound or
bisaminothiophenol compound (curing agent (B1)) having at least two crosslinkable reaction groups represented by the formula (1): 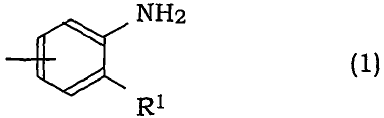 wherein R¹ is -NH₂, -NHR², -OH or -SH; R² is a fluorine atom or a monovalent organic group,
   a bisamidorazone compound or bisamidoxime compound (curing agent (B2)) represented by the formula (2): 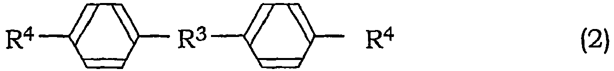 wherein R³ is -SO₂-, -O-, -CO-, an alkylene group having 1 to 6 carbon atoms, a perfluoroalkylene group having 1 to 10 carbon atoms or a single bond; R⁴ is 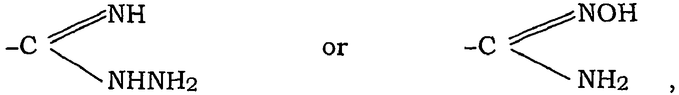 a bisamidorazone compound (curing agent (B3)) represented by the formula (3): 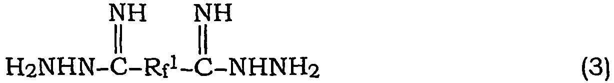 in which R_{f}¹ is a perfluoroalkylene group having 1 to 10 carbon atoms, and a bisamidoxime compound (curing agent (B4)) represented by the formula (4): 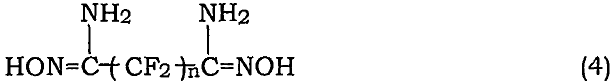 in which n is an integer of 1 to 10.

Among these, the curing agent (B1) having at least two crosslinkable reaction groups represented by the formula (1) is preferred as the curing agent (B).

The curing agent (B1) having at least two crosslinkable reaction groups represented by the formula (1) is preferably one having 2 to 3 crosslinkable reaction groups represented by the formula (1), more preferably one having 2 crosslinkable reaction groups. When the number of crosslinkable reaction groups represented by the formula (1) is less than 2, crosslinking cannot be carried out.

Preferred examples of the curing agent (B1) are curing agents which have two crosslinkable reaction groups represented by the formula (1) and are represented by the formula (30): 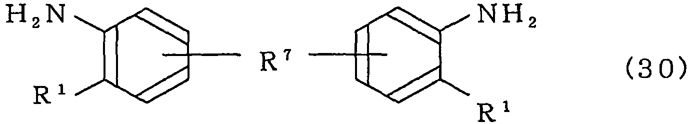 wherein R¹ is as defined above, R⁷ is -SO₂-, -O-, -CO-, an alkylene group having 1 to 6 carbon atoms, a perfluoroalkylene group having 1 to 10 carbon atoms, a single bond or a group represented by: 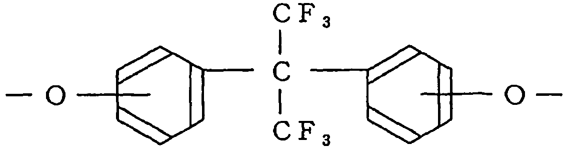 from the viewpoint of easy synthesis.

Preferred examples of an alkylene group having 1 to 6 carbon atoms are a methylene group, an ethylene group, a propylene group, a butylene group, a pentylene group, and a hexylene group, and examples of a perfluoroalkylene group having 1 to 10 carbon atoms are 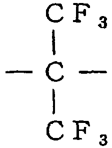 .

These compounds are known as the examples of bisdiaminophenyl compounds in JP2-59177B and JP8-120146A.

Among these, more preferred curing agents (B1) are compounds represented by the formula (31): 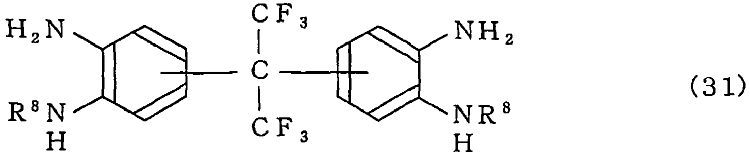 wherein R⁸s are the same or different, and each is a hydrogen atom, an alkyl group having 1 to 10 carbon atoms; a fluorine atom-containing alkyl group having 1 to 10 carbon atoms; a phenyl group; a benzyl group; or phenyl group or benzyl group, in which 1 to 5 hydrogen atoms are replaced by fluorine atoms and/or -CF₃.

Nonlimiting examples thereof are bisdiaminophenyl curing agents such as 2,2-bis(3,4-diaminophenyl)hexafluoropropane, 2,2-bis[3-amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-phenylamino)phenyl]hexafluoropropane, 2,2-bis[3-amino-4-(N-perfluorophenylamino)phenyl]hexafluoropropane, and 2,2-bis[3-amino-4-(N-benzylamino)phenyl]hexafluoropropane; and bisaminophenol curing agents such as 2,2-bis(3-amino-4-hydroxyphenyl)hexafluoropropane.

Among these, from the viewpoint that heat resistance is excellent, and crosslinking reactivity is particularly satisfactory, 2,2-bis(3-amino-4-hydroxyphenyl)hexafluoropropane (OH-AF), 2,2-bis[3-amino-4-(N-phenylamino)phenyl]hexafluoropropane (Nph-AF) and 2,2-bis(3,4-diaminophenyl)hexafluoropropane (TA-AF) are further preferred.

Such a bisaminophenol curing agent, a bisaminothiophenol curing agent, a bisdiaminophenyl curing agent, a bisamidrazone curing agent or a bisamidoxime curing agent reacts with a crosslinkable functional group such as a cyano group, a carboxyl group, an alkoxycarbonyl group or an acid halide group contained in the VdF type elastomer (A) of the present invention to form an oxazole ring, a thiazole ring or an imidazole ring, thereby giving a crosslinked product.

The curing agent (B) explained above provides a crosslinked product having excellent mechanical strength, heat resistance, chemical resistance and cold resistance, and satisfactorily balanced heat resistance and cold resistance.

The amount of curing agent (B) is preferably 0.1 to 20 parts by mass, more preferably 0.5 to 10 parts by mass based on 100 parts by mass of the VdF type elastomer (A). When the amount of the curing agent (B) is less than 0.1 part by mass, there is a tendency that mechanical strength, heat resistance and chemical resistance sufficient for practical use cannot be obtained, and when exceeding 20 parts by mass, it takes long time for crosslinking and a crosslinked product tends to become hard and be free from flexibility.

### (C) Compound generating ammonia at 40° to 330°C (ammonia-generating compound)

The ammonia-generating compound (C) has not been positively investigated due to a problem with amine resistance in the case of VdF type elastomers. However, it was found that by the combination use with the specific curing agent used in the present invention, sealing property under high temperature environment exceeding 200°C can be achieved and crosslinking speed can be greatly improved.

Ammonia generated from this ammonia-generating compound (C) at a crosslinking reaction temperature (40° to 330°C) causes crosslinking of the VdF type elastomer, resulting in occurrence of curing, and at the same time, curing is accelerated by the curing agent (B). There is a compound undergoing reaction with a trace amount of water to generate ammonia.

Preferred examples of the ammonia-generating compound (C) are urea and ammonium salts, and either an organic ammonium salt and an inorganic ammonium salt may be used as an ammonium salt.

Examples of urea are urea and in addition, urea derivatives such as biurea, thiourea, hydrochloric acid salt urea and biuret.

Examples of an organic ammonium salt are compounds described in JP9-111081A, WO 00/09603 and WO 98/23675, for example, ammonium salts of polyfluorocarboxylic acid such as ammonium perfluorohexanoate, ammonium perfluorooctanoate, ammonium perfluorobutyrate, ammonium perfluoroacetylate, ammonium perfluorododecanoate and ammonium perfluorohexadecanoate; ammonium salts of polyfluorosulfonic acid such as ammonium perfluorohexane sulfonate, ammonium perfluorooctane sulfonate, ammonium perfluorododecane sulfonate and ammonium perfluorohexadecane sulfonate; ammonium salts of phosphoric acids and phosphonic acids having polyfluoroalkyl group such as ammonium perfluorohexane phosphate, ammonium perfluorooctane phosphate, ammonium perfluorohexane phosphonate and ammonium perfluorooctane phosphonate; and ammonium salts of non-fluorine-containing carboxylic acid or sulfonic acid such as ammonium benzoate, ammonium adipate and ammonium phthalate. Among these, ammonium salts of fluorine-containing carboxylic acids, sulfonic acids or phosphoric acids are preferred in consideration of dispersibility in the VdF type elastomer, and ammonium salts of non-fluorine-containing carboxylic acids, sulfonic acids or phosphoric acids are preferred from the viewpoint of low price.

Examples of an inorganic ammonium salt are compounds described in JP9-111081A, for example, ammonium sulfate, ammonium carbonate, ammonium nitrate and ammonium phosphate, and in consideration of vulcanization characteristics, ammonium phosphate is preferred.

In addition, there can be used acetaldehyde ammonia, hexamethylenetetramine, formamidine, formamidine hydrochloric acid salt, formamidine acetic acid salt, t-butyl carbamate, benzyl carbamate, HCF₂CF₂CH(CH₃)OCONH₂ and phthalamide.

These ammonia-generating compounds (C) may be used alone or may be used in combination of two or more thereof.

The blending amount of ammonia-generating compound (C) may be optionally selected depending on an amount of ammonia to be generated, and is usually 0.01 to 10 parts by mass, preferably 0.02 to 5 parts by mass, more preferably 0.05 to 3 parts by mass based on 100 parts by mass of the VdF type elastomer. When the amount of ammonia-generating compound is too small, since crosslinking density becomes low, there is a tendency that heat resistance and chemical resistance sufficient for practical use are not exhibited. When the amount of ammonia-generating compound is too large, there is a problem that scorching may occur and storage stability is lowered and there is a tendency that a tone of color of a molded article lacks in transparency.

### (D) Other components

In the present invention, usual additives added, as case demands, to fluorine-containing elastomer compositions, for example, a filler (D1), a processing aid, a plasticizer, a colorant, a stabilizer and an adhesive aid can be blended for applications in the fields where high purity and stain-proofing property are not demanded, and one or more usual crosslinking agents and crosslinking aids different from those mentioned above can be blended.

The filler (D1) is used for improving physical properties of a crosslinked article such as tensile strength, modulus and hardness, and can be added in the present invention according to necessity.

Examples of the filler (D1) are carbon black, talc, silicic acid, silicic acid compound, calcium carbonate, barium sulfate, clay, high styrene resin, phenol resin, and coumarone-indene resin. Among them, examples of carbon black used generally are thermal black, bituminous coal filler, furnace black and channel black. From the viewpoint of compression set, bituminous coal filler is preferred, and from the viewpoint of dynamical physical properties, a mixture of bituminous coal filler and thermal black is preferred.

The amount of filler (D1) is preferably 10 to 50 parts by mass based on 100 parts by mass of the VdF type elastomer (A), from the viewpoint of satisfactory dynamical physical properties of the obtained molded article, and is more preferably 15 to 45 parts by mass based on 100 parts by mass of the VdF type elastomer (A), from the viewpoint of further satisfactory balance between tensile strength and elongation of the obtained molded article.

When the mixture of bituminous coal filler and thermal black is used, its weight ratio (bituminous coal filler/ thermal black) is preferably 9/95 to 80/20, more preferably 30/70 to 70/30. When the ratio is beyond the above-mentioned range, there is a case where lowering of compression set and pressing crack resistance is found.

A mixing method and a mixing order of each component of the above-mentioned curable composition are not limited particularly. Nonlimiting examples of a mixing method are as follows.
(1-1) A method of simultaneously mixing the VdF type elastomer (A), the curing agent (B) and the ammonia-generating compound (C).
(1-2) A method of previously mixing the component (B) and the component (C), and then mixing the component (A) to the mixture.
(1-3) A method of previously mixing a part of the component (A), the component (B) and the component (C) to make a master batch, and then mixing the remaining component (A) to the master batch.
(1-4) A method of previously mixing a part of the component (A) and the component (C) to make a master batch, and then mixing the remaining component (A) and the component (B) to the master batch (in this case, the remaining component (A) and the component (B) may have been previously mixed).

When the other additive (D) is blended, it may be blended in any stage of the above-mentioned methods.

When the other additive, especially the filler (D1) is used, (1-5) a method of previously mixing the component (C), the filler (D1) and, if necessary, a part of the component (A) to make a master batch, and then mixing the remaining components to the master batch (in this case, the remaining components may have been previously mixed) can be employed.

The amount of VdF type elastomer (A) to be used for preparing a master batch is preferably 1 to 50 % by mass based on the whole VdF type elastomer (A) from the viewpoint of making dispersibility of the ammonia-generating compound (C) satisfactory. When the amount of elastomer to be used for preparing a master batch is smaller, the elastomer to be used for preparing a master batch is not always limited to the VdF type elastomer (A), and other elastomers, for example, elastomers undergoing no scorching during the mixing such as elastomers having no cyano group may be used alone or may be used together. From the viewpoint of satisfactory compatibility with the VdF type elastomer (A), preferred example of other elastomer is a VdF type elastomer, more preferably the VdF type elastomer (A) comprising no cyano group-containing monomer (a3).

Also with respect to the composition of the master batch, it is preferable that the ammonia-generating compound (C) is contained in an amount of 5 to 120 parts by mass based on 100 parts by mass of the elastomer for the master batch, and when the curing agent (B) is blended to the master batch, its amount is 5 to 120 parts by mass.

The curable composition can be prepared by mixing the above-mentioned components by using usual elastomer processing machine, for example, an open roll, a Banbury mixer or a kneader. In addition, the composition can be prepared also by a method of using an internal mixer.

In the case of directly kneading the powder of the solid ammonia-generating compound (C) with the VdF type elastomer (A) by using a kneader or an open roll to disperse the ammonia-generating compound (C) in the VdF type elastomer (A), since the VdF type elastomer (A) has high surface sliding property, though it is possible to incorporate the ammonia-generating compound (C) in the elastomer, it is not easy to uniformly knead and disperse the compound.

The inventors of the present invention have found that the ammonia-generating compound (C) can be uniformly dispersed in the VdF type elastomer (A) by letting a solvent having affinity for the ammonia-generating compound (C) to be present in the mixing system. Namely, the present invention also relates to the process for preparing the curable composition of the present invention, in which the ammonia-generating compound (C) is uniformly dispersed.

The preparation process of the present invention is characterized in that for preparing the above-mentioned curable composition comprising the specific vinylidene fluoride type elastomer (A), the specific curing agent (B) and the ammonia-generating compound (C), the mixing of the ammonia-generating compound (C) with the other components is carried out in the presence of the solvent (E) having affinity for the ammonia-generating compound (C).

The meaning of the component (E) having affinity for the ammonia-generating compound (C) is that the component (E) has, for example, property of undergoing dissolution, dispersion or swelling of the ammonia-generating compound (C), and, for example, water (E1) or an organic solvent (E2) having affinity for the ammonia-generating compound (C) is preferred.

Examples of the organic solvent (E2) are alcohol solvents such as methanol, ethanol and glycerin.

Especially, water (E1) is preferred since it is cheap, is easily handled and removed and does not have much effect on environment.

The amount of solvent (E) greatly changes depending on kind and an amount of ammonia-generating compound (C), an amount of curing agent (B) and an amount of VdF type elastomer (A), and from the viewpoint of further improving dispersibility of the ammonia-generating compound (C), the amount of solvent (E) is preferably not less than 0.1 part by mass, further preferably not less than 1.0 part by mass based, on 100 parts by mass of the VdF type elastomer (A). An upper limit of the amount is not limited particularly, and can be 500 parts by mass, further 100 parts by mass, especially 50 parts by mass based on 100 parts by mass of the VdF type elastomer (A).

Nonlimiting examples of a method of mixing each component of the composition of the present invention by using the solvent (E) are the following methods.
(2-1) A method of simultaneously mixing the VdF type elastomer (A), the curing agent (B), the ammonia-generating compound (C) and the solvent (E).
(2-2) A method of previously mixing the component (C) and the component (E), and then mixing the component (A) and the component (B) thereto.
(2-3) A method of previously mixing the component (B) and the component (C) in the presence of the component (E), and then mixing the component (A) thereto.
(2-4) A method of previously mixing a part of the component (A), the component (B), the component (C) and the component (E) to make a master batch, and then mixing the remaining component (A) to the master batch.
(2-5) A method of previously mixing the component (C) and the component (E), mixing a part of the component (A) thereto to make a master batch, and then mixing the remaining component (A) and the component (B) to the master batch (in this case, the remaining component (A) and the component (B) may have been previously mixed).

When the other additive (D) is blended, it may be blended in any stage of the above-mentioned methods.

When the other additive, especially the filler (D1) is used, (2-6) a method of previously mixing the component (C) and the component (E), previously mixing the filler (D1) and if necessary, a part of the component (A) thereto to make a master batch, and then mixing the remaining components to the master batch (in this case, the remaining components may have been previously mixed) can be employed.

The amount of VdF type elastomer (A) to be used for preparing a master batch is preferably 1 to 50 % by mass based on the whole VdF type elastomer (A) from the viewpoint of making dispersibility of the ammonia-generating compound (C) satisfactory. When the amount of elastomer to be used for preparing a master batch is smaller, the elastomer to be used for preparing a master batch is not always limited to the VdF type elastomer (A), and other elastomers, for example, elastomers undergoing no scorching during the mixing such as elastomers having no cyano group may be used alone or may be used together. From the viewpoint of satisfactory compatibility with the VdF type elastomer (A), preferred example of other elastomer is a VdF type elastomer, further preferably the VdF type elastomer (A) comprising no cyano group-containing monomer (a3).

Also with respect to the composition of the master batch, it is preferable that the ammonia-generating compound (C) is blended in an amount of 5 to 120 parts by mass based on 100 parts by mass of the elastomer for the master batch, and when the curing agent (B) is blended to the master batch, its amount is 5 to 120 parts by mass.

Except the mixing with the VdF type elastomer (A), usual stirring and mixing methods are enough for mixing each component.

Preparation of the master batch and further the mixing with the VdF type elastomer (A) can be carried out by mixing with usual elastomer processing equipment, for example, an open roll, a Banbury mixer, or a kneader . In addition, a method of using an internal mixer can be employed.

The solvent (E) used for the mixing is removed by the time when the curing (crosslinking and molding) is completed. For removing the solvent (E), a drying step may be employed as an independent step, may be conducted in the last stage of the mixing or in the extension stage of the mixing, or may be conducted in the first half of a curing (crosslinking and molding) step or during the curing step.

When the drying step is carried out independently, the mixture obtained by the mixing is dried.

The drying temperature is preferably not more than 40°C since the organic solvent can be removed and crosslinking reaction hardly proceeds. In addition, the drying time is preferably 6 to 72 hours from the viewpoint of accelerating removal of the solvent. The drying step may be conducted once or may be conducted plural times.

The curable composition of the present invention can be subjected to crosslinking by a usual method, for example, a method of heating and compressing in a metal die, a method of charging the composition into a heated metal die under pressure or a method of crosslinking after extruding the composition with an extruder. The crosslinking is carried out in order of primary crosslinking and lastly secondary crosslinking, and thus a molded article can be obtained. Primary crosslinking is carried out preferably at 150°C to 230°C for 5 to 120 minutes, more preferably at 160°C to 200°C for 5 to 60 minutes, especially preferably at 170°C to 190°C for 5 to 60 minutes. For crosslinking, known crosslinking means may be employed, for example, press-crosslinking.

Secondary crosslinking is carried out preferably at 160°C to 320°C for 2 to 24 hours, more preferably at 180°C to 310°C for 4 to 20 hours. For crosslinking, known crosslinking means may be employed, for example, oven-crosslinking.

The molded article of the present invention can be obtained by crosslinking and molding the curable composition of the present invention. The molded article of the present invention is excellent in heat resistance and has satisfactory compression set.

The molded article of the present invention can be widely used in the fields of automobile, aircraft, rocket, marine vessel, excavation of oil field, chemical plants, chemicals such as pharmaceuticals, photograph such as developing machine, printing such as printing machine, painting such as painting equipment, analytical, physical and chemical appliances, equipment in food plants, equipment in atomic power plants, iron and steel industry such as steel sheet processing equipment, general industry, electricity, fuel cells, electronic parts and molding at site.

Examples of application of the molded article of the present invention are sealing materials such as gaskets and non-contact type and contact type packings (self-seal packing, piston ring, split ring packing, mechanical seal, and oil seal) which are required to have heat resistance, oil resistance, fuel oil resistance, resistance to an anti-freezing fluid for cooling an engine and steam resistance and are used for engine body, main engine-drive system, valve gear system, lubricating and cooling system, fuel system, and suction/exhaust system for engine; transmission of driving gear system; steering system of chassis; brake system; standard electrical parts, electrical parts for control and accessory electrical parts for automobiles.

Sealing materials used on an engine body for automobiles are not limited particularly, and examples thereof are, for instance, gaskets such as a cylinder head gasket, cylinder head cover gasket, oil pan packing and general gaskets, and sealing materials such as an O-ring, packing and timing belt cover gasket.

Sealing materials used for a main engine-drive system of automobile are not limited particularly, and examples thereof are, for instance, shaft seals such as crank shaft seal and cam shaft seal.

Sealing materials used for valve gear system of an automobile engine are not limited particularly, and examples thereof are, for instance, a valve stem oil seal of an engine valve.

Sealing materials used for a lubricating and cooling system of an automobile engine are not limited particularly, and an example thereof is for instance, a seal gasket for engine oil cooler.

Sealing materials used for a fuel system of an automobile engine are not limited particularly, and examples thereof are, for instance, an oil seal of a fuel pump, a filler seal and tank packing of a fuel tank, a connector O-ring of a fuel tube, an injector cushion ring, an injector seal ring and an injector O-ring of a fuel injector, and a flange gasket of a carburetor.

Sealing materials used for a suction/exhaust system of an automobile engine are not limited particularly, and examples thereof are, for instance, a suction manifold packing and exhaust manifold packing of a manifold, a throttle body packing, and a turbine shaft seal of a turbo charger .

Sealing materials used for a transmission system of automobile are not limited particularly, and examples thereof are, for instance, a bearing seal, oil seal, O-ring and packing for transmission and an O-ring and packing for automatic transmission.

Sealing materials used for a brake system of automobile are not limited particularly, and examples thereof are, for instance, an oil seal, O-ring, packing, piston cup (rubber cup) of a master cylinder, caliper seal, and boots .

Sealing materials used for accessory electrical equipment of automobile are not limited particularly, and examples thereof are, for instance, an O-ring and packing of an air conditioner.

The molded article of the present invention is a sealing material suitable especially for an oxygen sensor, further for an oxygen sensor of automobile, and is particularly suitable as sealing materials for an oxygen sensor and a fuel-air ratio sensor for which higher crosslinking speed and heat resistance are demanded, and is also suitable as a turbo-charger hose and EGR hose.

Applications other than automobile application are not limited particularly, and examples thereof are, for instance, packings, O-rings and other sealing materials requiring oil resistance, chemical resistance, heat resistance, steam resistance and weather resistance in transport means such as ships and air planes; packings, O-rings and other sealing materials requiring oil resistance, heat resistance, steam resistance and weather resistance in excavation of oil field; similar packings, O-rings and sealing materials for chemical plants; similar packings, O-rings and sealing materials for food plant equipment and food processing equipment (including those for domestic use); similar packings, O-rings and sealing materials for equipment of atomic power plant; and similar packings, O-rings and sealing materials for general industrial parts.

### EXAMPLE

The present invention is then explained by means of examples, but is not limited to them.

Crosslinking conditions used in the present invention are the following conditions.

### (Standard crosslinking conditions)

Kneading method: Kneading with roll
Press-crosslinking: 10 minutes at 180°C (unless otherwise specified)
Oven-crosslinking: 2 hours at 200°C, 2 hours at 260°C, 18 hours at 290°C

In the present invention, various characteristics are measured by the following methods.

### < Mooney viscosity (ML₁₊₁₀(121°C)) >

Mooney viscosity is measured in accordance with ASTM-D1646 and JIS K6300.

### < Glass transition temperature Tg >

By using DSC (differential scanning calorimeter), in the 1st run, temperature is raised up to 200°C at a temperature elevating rate of 10°C/min, followed by maintaining at 200°C for one minute and cooling down to 25°C at a temperature decreasing rate of 10°C/min, and then a center point of heat absorption curve obtained in the 2nd run of heating at a temperature elevating rate of 10°C/min is assumed to be Tg. The used differential scanning calorimeter is one available from Seiko Instruments Kabushiki Kaisha.

### < Crosslinking characteristics >

Measuring is carried out in accordance with JIS K6300 with JSR Curastometer Model II (available from Nichigo Shoji Kabushiki Kaisha) at primary press-crosslinking. A crosslinking curve at 180°C is made, and a minimum viscosity (ML), degree of crosslinking (MH), induction time (T10) and optimum crosslinking time (T90) are determined.

### < 100 % modulus (M100) >

A curable composition shown in Table 1 is subjected to primary press-crosslinking and secondary oven-crosslinking under the standard crosslinking conditions to prepare a 2 mm thick sheet, and measuring is carried out in accordance with JIS K6251.

### < Tensile strength at break (Tb) and tensile elongation at break (Eb) >

A curable composition shown in Table 1 is subjected to primary press-crosslinking and secondary oven-crosslinking under the standard crosslinking conditions to prepare a 2 mm thick sheet, and measuring is carried out in accordance with JIS K6251.

### < Shore A hardness (Hs) >

Measuring is carried out in accordance with ASTM D2240 using an analog hardness meter Model A available from Kobunshi Keiki Kabushiki Kaisha.

### < Compression set (CS) >

Compression set (CS) of O-ring (AS-568A-214) after compression at 260°C for 70 hours, 168 hours and 336 hours is measured in accordance with JIS K6301.

### PREPARATION EXAMPLE 1

### (Synthesis of CN group-containing copolymer (A1))

Into a 6-liter stainless steel autoclave having no ignition source were poured 3.0 liter of pure water, 6.0 g of C₅F₁₁COONH₄ and 0.15 g of CH₂=CFCF₂OCF(CF₃)CF₂OCF(CF₃)COONH₄ as emulsifying agents, 3.5 g of disodium hydrogen phosphate and 0.6 g of sodium hydroxide, and the inside of a system was sufficiently replaced with nitrogen gas and subjected to deaeration. Then, the autoclave was heated up to 80°C with stirring at 600 rpm, and a gas mixture of VdF, TFE and HFP (VdF/TFE/HFP = 19/ 11/70 in molar percent) was introduced so that the inside pressure became 1.52 MPa·G. Then, an aqueous solution of ammonium persulfate (APS) of 1.8 g/2 ml and 1.8 g of CF₂=CFOCF₂CF(CF₃)OCF₂CF₂CN (CNVE) were introduced with pressurized nitrogen gas to initiate a reaction.

As the polymerization proceeded, when the inside pressure decreased to 1.48 MPa·G, 0.2 g of diethyl malonate was introduced with pressurized nitrogen gas. Then, a pressurized gas mixture of VdF, TFE and HFP (VdF/TFE/HFP = 50/20/30 in molar percent) was introduced so that the inside pressure became 1.52 MPa·G. Thereafter, as the reaction proceeded, a pressurized gas mixture of VdF, TFE and HFP was introduced, and increasing and decreasing of the inside pressure were repeated between 1.48 MPa·G and 1.52 MPa·G, and 30 g of CNVE and 1.2 g of sodium hydroxide were introduced with pressurized nitrogen gas.

When the total amount of introduced VdF, TFE and HFP reached 1,000 g ten hours after starting of the polymerization reaction, the autoclave was cooled, and unreacted monomers were discharged to obtain 3,984 g of an aqueous dispersion having a solid content of 25.5 % by mass.

2,000 g of this aqueous dispersion was slowly added to 2,000 g of an aqueous solution of magnesium sulfate with stirring. The solution was stirred for one minute after the addition, and then a coagulated product was filtered off, followed by repeating the washing with water and the filtering off three times and then drying at 70°C for 24 hours to obtain 499 g of a polymer.

As a result of analysis, this polymer was one comprising monomer units of VdF/TFE/HFP/CNVE = 49.6/18.3/31.2/0.9 in molar percent. In addition, according to measurement by infrared spectroscopic analysis, characteristic absorption of nitrile group was recognized around 2,169 cm⁻¹. Mooney viscosity (ML₁₊₁₀(121°C)) of this copolymer was 71, and glass transition temperature Tg thereof was -8°C.

### PREPARATION EXAMPLE 2

### (Synthesis of CN group-containing copolymer (A2))

Into a 6-liter stainless steel autoclave having no ignition source were poured 3.0 liter of pure water, 6.0 g of C₅F₁₁COONH₄ and 0.15 g of CH₂=CFCF₂OCF(CF₃)CF₂OCF(CF₃)COONH₄ as emulsifying agents, 3.5 g of disodium hydrogen phosphate and 0.6 g of sodium hydroxide, and the inside of a system was sufficiently replaced with nitrogen gas and subjected to deaeration. Then, the autoclave was heated up to 80°C with stirring at 600 rpm, and a gas mixture of VdF, TFE and PMVE (VdF/TFE/PMVE = 64/8/28 in molar percent) was introduced so that the inside pressure became 1.53 MPa·G. Then, an aqueous solution of ammonium persulfate (APS) of 1.8 g/2 ml and 1.8 g of CF₂=CFOCF₂CF(CF₃)OCF₂CF₂CN (CNVE) were introduced with pressurized nitrogen gas to initiate a reaction.

As the polymerization proceeded, when the inside pressure decreased to 1.48 MPa·G, 0.2 g of diethyl malonate was introduced with pressurized nitrogen gas. Then, a pressurized gas mixture of VdF, TFE and PMVE (VdF/TFE/PMVE = 70/12/18 in molar percent) was introduced so that the inside pressure became 1.53 MPa·G. Thereafter, as the reaction proceeded, a pressurized gas mixture of VdF, TFE and PMVE was introduced, and increasing and decreasing of the inside pressure were repeated between 1.48 MPa·G and 1.53 MPa·G, and 30 g of CNVE and 1.2 g of sodium hydroxide were introduced with pressurized nitrogen gas.

When the total amount of introduced VdF, TFE and PMVE reached 1,000 g ten hours after starting of the polymerization reaction, the autoclave was cooled, and unreacted monomers were discharged to obtain 4,061 g of an aqueous dispersion having a solid content of 25.1 % by mass.

2,000 g of this aqueous dispersion was slowly added to 2,000 g of an aqueous solution of magnesium sulfate with stirring. The solution was stirred for one minute after the addition, and then a coagulated product was filtered off, followed by repeating the washing with water and the filtering off three times, washing with methanol and then drying at 70°C for 48 hours to obtain 498 g of a polymer.

As a result of analysis, this polymer was one comprising monomer units of VdF/TFE/PMVE/CNVE = 66.2/13.5/19.3/1.0 in molar percent. In addition, according to measurement by infrared spectroscopic analysis, characteristic absorption of nitrile group was recognized around 2,169 cm⁻¹. Mooney viscosity (ML₁₊₁₀(121°C)) of this polymer was 80, and glass transition temperature Tg thereof was -30°C.

### EXAMPLE 1

A curable composition was prepared by mixing 1.8 parts by mass of 2,2-bis(3-amino-4-hydroxyphenyl)hexafluoropropane (OH-AF) as a curing agent, 0.05 part by mass of urea (powder available from Kishida Chemical Co., Ltd.) and 20 parts by mass of carbon black (CB) (Thermax N990 available from Cancarb Co., Ltd.) to 100 parts by mass of CN group-containing copolymer (A1) prepared in Preparation Example 1 and then kneading with an open roll. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 2

A curable composition was prepared in the same manner as in Example 1 except that the amount of urea was changed to 0.1 part by mass. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 3

A curable composition was prepared in the same manner as in Example 1 except that the amount of urea was changed to 0.5 part by mass. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 4

A curable composition was prepared in the same manner as in Example 1 except that 0.3 part by mass of ammonium perfluorohexanoate was added instead of urea. A part of this curable composition was collected, and crosslinking characteristics thereof at 180°C were examined with a Curastometer. The composition was subjected to crosslinking at 180°C for 20 minutes to prepare a sample sheet, and 100 % modulus, tensile strength at break, tensile elongation at break, Shore A hardness and compression set were measured. The results are shown in Table 1.

### EXAMPLE 5

A curable composition was prepared in the same manner as in Example 4 except that the amount of ammonium perfluorohexanoate was changed to 0.5 part by mass. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 6

A curable composition was prepared in the same manner as in Example 4 except that the amount of ammonium perfluorohexanoate was changed to 2.75 parts by mass. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 7

A curable composition was prepared by mixing 1.8 parts by mass of 2,2-bis(3-amino-4-hydroxyphenyl)hexafluoropropane (OH-AF) as a curing agent, 0.4 part by mass of ammonium adipate and 20 parts by mass of carbon black (CB) (Thermax N990 available from Cancarb Co., Ltd.) to 100 parts by mass of CN group-containing copolymer (A1) prepared in Preparation Example 1 and then kneading with an open roll. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 8

A curable composition was prepared by mixing 1.8 parts by mass of 2,2-bis(3-amino-4-hydroxyphenyl)hexafluoropropane (OH-AF) as a curing agent, 1.0 part by mass of ammonium phthalate and 20 parts by mass of carbon black (CB) (Thermax N990 available from Cancarb Co., Ltd.) to 100 parts by mass of CN group-containing copolymer (A1) prepared in Preparation Example 1 and then kneading with an open roll. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 9

A solution of urea was prepared by dissolving 0.1 part by mass of urea (powder available from Kishida Chemical Co., Ltd.) in the same amount of water. Then, a curable composition was prepared by mixing 1.8 parts by mass of 2,2-bis(3-amino-4-hydroxyphenyl)hexafluoropropane (OH-AF) as a curing agent, the prepared solution of urea containing 0.1 part by mass of urea and 20 parts by mass of carbon black (CB) (Thermax N990 available from Cancarb Co., Ltd.) to 100 parts by mass of the CN group-containing copolymer (A1) prepared in Preparation Example 1 and then kneading with an open roll. A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 10

1.8 parts by mass of 2,2-bis(3-amino-4-hydroxyphenyl)hexafluoropropane (OH-AF) as a curing agent and a mixture of 10 parts by mass of methanol, 0.5 part by mass of urea (available from Kishida Chemical Co., Ltd.) and 20 parts by mass of carbon black (CB) (Thermax N990 available from Cancarb Co., Ltd.) were blended to 100 parts by mass of CN group-containing copolymer (A1) prepared in Preparation Example 1, followed by kneading with an open roll to prepare a curable composition. A part of this curable composition was collected, and crosslinking characteristics thereof at 180°C were examined with a Curastometer. The composition was subjected to crosslinking under the above-mentioned standard crosslinking conditions to prepare a sample sheet, and compression set was measured. The results are shown in Table 1.

### EXAMPLE 11

A curable composition was prepared in the same manner as in Example 3 except that 2,2-bis[3-amino-4-(N-phenylamino)phenyl)hexafluoropropane (Nph-AF) was used as a curing agent instead of OH-AF. A part of this curable composition was collected, and crosslinking characteristics thereof at 180°C were examined with a Curastometer.

The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 12

A curable composition was prepared in the same manner as in Example 1 except that 2,2-bis(3,4-diaminophenyl)hexafluoropropane (TA-AF) was used as a curing agent instead of OH-AF. A part of this curable composition was collected, and crosslinking characteristics thereof at 180°C were examined with a Curastometer.

The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 1.

### EXAMPLE 13

A curable composition was prepared in the same manner as in Example 2 except that the CN group-containing copolymer (A2) prepared in Preparation Example 2 was used instead of the CN group-containing copolymer (A1). A part of this curable composition was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set was measured. The results are shown in Table 1.

### COMPARATIVE EXAMPLE 1

A curable composition for comparison was prepared by mixing 1.8 parts by mass of 2,2-bis(3-amino-4-hydroxyphenyl)hexafluoropropane (OH-AF) as a curing agent and 20 parts by mass of carbon black (N990) to 100 parts by mass of the CN group-containing copolymer (A1) and then kneading with an open roll. A part of this curable composition for comparison was collected, and crosslinking characteristics thereof at 180°C were examined with a Curastometer.

In addition, this curable composition was subjected to crosslinking at 180°C for 30 minutes to prepare a sample sheet, and 100 % modulus, tensile strength at break, tensile elongation at break, Shore A hardness and compression set were measured. The results are shown in Table 2.

### COMPARATIVE EXAMPLE 2

A curable composition was prepared in the same manner as in Comparative Example 1 except that 2,2-bis[3-amino-4-(N-phenylamino)phenyl)hexafluoropropane (Nph-AF) was used as a curing agent instead of OH-AF. A part of this curable composition for comparison was collected, and crosslinking characteristics thereof at 180°C were examined with a Curastometer.

The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 2.

### COMPARATIVE EXAMPLE 3

A curable composition was prepared in the same manner as in Comparative Example 1 except that 2,2-bis(3,4-diaminophenyl)hexafluoropropane (TA-AF) was used as a curing agent instead of OH-AF. A part of this curable composition for comparison was collected, and crosslinking characteristics thereof at 180°C were examined with a Curastometer.

The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 2.

### COMPARATIVE EXAMPLE 4

A curable composition was prepared in the same manner as in Example 1 except that a curing agent was not used. A part of this curable composition for comparison was collected, and crosslinking characteristics thereof at 180°C were examined with a Curastometer. The results are shown in Table 2.

### COMPARATIVE EXAMPLE 5

A curable composition was prepared in the same manner as in Example 13 except that urea was not used. A part of this curable composition for comparison was collected, and crosslinking characteristics thereof at 180°C were examined with a Curastometer. The composition was subjected to crosslinking under the above-mentioned standard crosslinking conditions to prepare a sample sheet, and 100 % modulus, tensile strength at break, tensile elongation at break, Shore A hardness and compression set were measured. The results are shown in Table 2.

**TABLE 1**

| | | Example | | | | | | |
|---|---|---|---|---|---|---|---|---|
| | | 1 | 2 | 3 | 4 | 5 | 6 | 7 |
| (A) VdF elastomer | | | | | | | | |
| | Kind | A1 | A1 | A1 | A1 | A1 | A1 | A1 |
| | Amount (part by mass) | 100 | 100 | 100 | 100 | 100 | 100 | 100 |
| | Tg (°C) | -8 | -8 | -8 | -8 | -8 | -8 | -8 |
| (B) Curing agent (part by mass) | | | | | | | | |
| | OH-AF | 1.8 | 1.8 | 1.8 | 1.8 | 1.8 | 1.8 | 1.8 |
| | Nph-AF | - | - | - | - | - | - | - |
| | TA-AF | - | - | - | - | - | - | - |
| (C) Ammonia-generating compound (part by mass) | | | | | | | | |
| | Urea | 0.05 | 0.1 | 0.5 | - | - | - | - |
| | Ammonium perfluorohexanoate | - | - | - | 0.3 | 0.5 | 2.75 | - |
| | Ammonium adipate | - | - | - | - | - | - | 0.4 |
| | Ammonium phthalate | - | - | - | | - | - | - |
| (D) Other component (part by mass) | | | | | | | | |
| | CB | 20 | 20 | 20 | 20 | 20 | 20 | 20 |
| | Water | - | - | - | - | - | - | - |
| | Methanol | - | - | - | - | - | - | - |
| Crosslinking characteristics | | | | | | | | |
| | ML (N) | 4.4 | 4.4 | 5.8 | 5.4 | 4.4 | 5.2 | 4.5 |
| | MH (N) | 21.1 | 21.6 | 22.5 | 27.2 | 25.1 | 26.0 | 27 |
| | T10 (min) | 2.5 | 2.5 | 1.2 | 4.0 | 2.5 | 1.0 | 0.5 |
| | T90 (min) | 12.0 | 6.2 | 2.3 | 7.5 | 6.5 | 2.2 | 1.2 |
| Physical properties | | | | | | | | |
| Before heating | | | | | | | | |
| | M 100 (MPa) | 3.3 | 3.0 | 3.1 | 2.6 | 3.1 | 3.1 | 3.1 |
| | TB (MPa) | 14.3 | 16.7 | 16.3 | 15.8 | 15.2 | 17.4 | 12.5 |
| | EB (%) | 210 | 220 | 214 | 218 | 206 | 240 | 260 |
| | Hs (Shore A) | 67 | 67 | 67 | 68 | 68 | 67 | 67 |
| After heating (275°C x 70 hr) | | | | | | | | |
| | M100 (MPa) | 3.5 | 2.7 | 2.9 | 3.0 | 3.2 | 3.3 | 2.8 |
| | ΔM100 (%) | +5.8 | -8.6 | -4.7 | +15.6 | +2.6 | +8.9 | -10.0 |
| | TB (MPa) | 14.0 | 13.7 | 13.3 | 11.5 | 12.6 | 16.4 | 11 |
| | ΔTB (%) | -1.6 | -18.0 | -18.4 | -27.0 | -17.1 | -5.6 | -12 |
| | EB (%) | 203 | 201 | 206 | 194 | 193 | 226 | 240 |
| | ΔEB (%) | -3 | -8 | -4 | -11 | -6 | -6 | -8 |
| | Hs (Shore A) | 67 | 65 | 65 | 68 | 69 | 68 | 66 |
| | ΔHS (point) | 0 | -2 | -2 | 0 | +1 | +1 | -1 |
| CS (260°C) (%) | | | | | | | | |
| | 70 hr | 43 | 39 | 43 | 43 | 47 | 47 | 48 |
| | 168 hr | 53 | 53 | 59 | 59 | 67 | 62 | - |
| | 336 hr | 72 | 66 | 74 | 71 | 78 | 76 | - |

| | | 8 | 9 | 10 | 11 | 12 | 13 | |
|---|---|---|---|---|---|---|---|---|
| (A) VdF elastomer | | | | | | | | |
| | Kind | A1 | A1 | A1 | A1 | A1 | A2 | |
| | Amount (part by mass) | 100 | 100 | 100 | 100 | 100 | 100 | |
| | Tg (°C) | -8 | -8 | -8 | -8 | -8 | -30 | |
| (B) Curing agent (part by mass) | | | | | | | | |
| | OH-AF | 1.8 | 1.8 | 1.8 | - | - | 1.8 | |
| | Nph-AF | - | - | - | 1.8 | - | | |
| | TA-AF | - | - | - | | 1.8 | | |
| (C) Ammonia-generating compound (part by mass) | | | | | | | | |
| | Urea | - | 0.1 | 0.5 | 0.5 | 0.5 | 0.1 | |
| | Ammonium perfluorohexanoate | - | - | - | - | - | - | |
| | Ammonium adipate | - | - | - | - | - | - | |
| | Ammonium phthalate | 1.0 | - | - | - | - | - | |
| (D) Other component (part by mass) | | | | | | | | |
| | CB | 20 | 20 | 20 | 20 | 20 | 20 | |
| | Water | - | 0.1 | - | - | - | - | |
| | Methanol | - | - | 10 | - | - | - | |
| Crosslinking characteristics | | | | | | | | |
| | ML (N) | 4.6 | 5.4 | 4.5 | 3.6 | 3.9 | 7.0 | |
| | MH (N) | 25.7 | 22.5 | 21 | 16.7 | 22.5 | 21.9 | |
| | T10 (min) | 0.5 | 3.8 | 1 | 1.7 | 0.9 | 3.5 | |
| | T90 (min) | 1.5 | 6.5 | 2.2 | 3.5 | 2.1 | 13.5 | |
| Physical properties | | | | | | | | |
| Before heating | | | | | | | | |
| | M100 (MPa) | 4.5 | 2.9 | 3.0 | 2.4 | 3.5 | 3.5 | |
| | TB (MPa) | 14.8 | 16.5 | 16.0 | 9.2 | 12.6 | 16.2 | |
| | EB (%) | 270 | 250 | 210 | 190 | 210 | 200 | |
| | Hs (Shore A) | 68 | 67 | 67 | 67 | 69 | 66 | |
| After heating (275°C x 70 hr) | | | | | | | | |
| | M 100 (MPa) | 4.5 | 3.0 | 2.9 | 2.7 | 3.6 | 3.2 | |
| | ΔM100 (%) | -11 | +4.7 | -4.7 | +7.1 | +2.4 | -9 | |
| | TB (MPa) | 14.2 | 14.3 | 11.6 | 7.2 | 11.8 | 12.5 | |
| | ΔTB (%) | -4 | -13.3 | -28.8 | -21.5 | -6.6 | -23 | |
| | EB (%) | 240 | 232 | 190 | 180 | 200 | 150 | |
| | ΔEB (%) | -11 | -7 | -11 | -9 | -5 | -25 | |
| | Hs (Shore A) | 67 | 67 | 65 | 67 | 69 | 67 | |
| | ΔHS (point) | -1 | 0 | -2 | 0 | 0 | 1 | |
| CS (260°C) (%) | | | | | | | | |
| | 70 hr | 54 | 45 | 45 | 64 | 62 | 57 | |
| | 168 hr | | 63 | 55 | 85 | 83 | 80 | |
| | 336 hr | | 77 | 73 | - | 96 | 94 | |

**TABLE 2**

| | | Comparative Example | | | | |
|---|---|---|---|---|---|---|
| | | 1 | 2 | 3 | 4 | 5 |
| (A) VdF elastomer | | | | | | |
| | Kind | A1 | A1 | A1 | A1 | |
| | Amount (part by mass) | 100 | 100 | 100 | 100 | 100 |
| | Tg (°C) | -8 | -8 | -8 | -8 | -30 |
| (B) Curing agent (part by mass) | | | | | | |
| | OH-AF | 1.8 | - | - | - | 1.8 |
| | Nph-AF | - | 1.8 | - | - | - |
| | TA-AF | - | - | 1.8 | - | - |
| (C) Ammonia-generating compound (part by mass) | | | | | | |
| | Urea | - | - | - | 0.05 | - |
| | Ammonium perfluorohexanoate | - | - | - | - | - |
| | Ammonium adipate | - | - | - | - | - |
| | Ammonium phthalate | - | - | - | - | - |
| (D) Other component (part by mass) | | | | | | |
| | CB | 20 | 20 | 20 | 20 | 20 |
| | Water | - | - | - | - | - |
| | Methanol | - | - | - | - | - |
| Crosslinking characteristics | | | | | | |
| | ML (N) | 5.9 | 3.9 | 3.6 | 4.4 | 4.8 |
| | MH (N) | 21.1 | 9.8 | 16.7 | 4.5 | 28.5 |
| | T 10 (min) | 11.0 | 11.0 | 6.0 | - | 3 |
| | T90 (min) | 25.0 | 48.0 | 25.0 | - | 60.0 |
| Physical properties | | | | | | |
| Before heating | | | | | | |
| | M100 (MPa) | 3.0 | 2.1 | 4.3 | - | 5.6 |
| | TB (MPa) | 18.3 | 14.3 | 16.8 | - | 15.3 |
| | EB (%) | 216 | 300 | 190 | - | 180 |
| | Hs (Shore A) | 66 | 66 | 68 | - | 68 |
| After heating (275°C x 70 hr) | | | | | | |
| | M 100 (MPa) | 3.3 | 2.7 | 4.1 | - | 4.5 |
| | ΔM100 (%) | +8.6 | +27.4 | -4.7 | - | -10 |
| | TB (MPa) | 16.8 | 12.1 | 16.3 | - | 12.5 |
| | ΔTB (%) | -8.3 | -15.2 | -2.5 | - | -31 |
| | EB (%) | 210 | 250 | 190 | - | 180 |
| | ΔEB (%) | -3 | -17 | 0 | - | -22 |
| | Hs (Shore A) | 68 | 67 | 67 | - | 69 |
| | ΔHS (point) | +2 | -1 | -1 | - | 1 |
| CS (260°C) (%) | | | | | | |
| | 70 hr | 46 | 86 | 60 | - | 55 |
| | 168 hr | 64 | - | 82 | - | 79 |
| | 336 hr | 78 | - | 95 | - | 94 |

From the results shown in Table 1 and 2, it is seen that crosslinking speed is greatly improved as compared with single use of a curing agent. Further, it is seen that physical properties under normal conditions are improved by the presence of the solvent (water) having affinity for urea.

### INDUSTRIAL APPLICABILITY

The present invention can provide a curable composition of a vinylidene fluoride type elastomer assuring improved crosslinking speed and making it possible to use a cheap curing agent, and a molded article obtained from the curable composition.

## Claims

1. A curable composition comprising:
(A) a vinylidene fluoride type elastomer which is a copolymer of vinylidene fluoride (a1), at least one perfluoroolefin (a2) selected from the group consisting of tetrafluoroethylene, hexafluoropropylene and perfluoro(alkyl vinyl ether) and a cyano group-containing monomer (a3) (a proportion of the vinylidene fluoride exceeds 20 % by mole),
(B) at least one curing agent selected from the group consisting of a compound having at least two crosslinkable reaction groups represented by the formula (1): 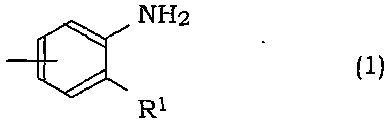 wherein R¹s are the same or different and each is -NH₂, -NHR², -OH or -SH; R² is a fluorine atom or a monovalent organic group,
a compound represented by the formula (2): 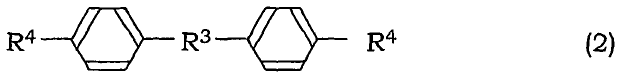 wherein R³ is -SO₂-, -O-, -CO-, an alkylene group having 1 to 6 carbon atoms, a perfluoroalkylene group having 1 to 10 carbon atoms or a single bond; R⁴ is 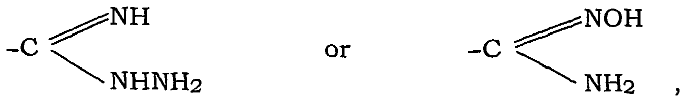 a compound represented by the formula (3): 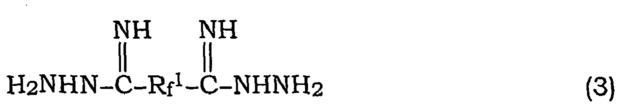 in which R_{f}¹ is a perfluoroalkylene group having 1 to 10 carbon atoms, and a compound represented by the formula (4): 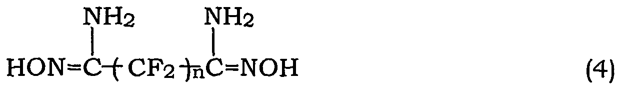 in which n is an integer of 1 to 10, and
(C) a compound generating ammonia at 40° to 330°C.

2. The curable composition of Claim 1, wherein the compound (C) generating ammonia is urea or an ammonium salt.

3. A molded article obtained by curing the curable composition of Claim 1 or 2.

4. The molded article of Claim 3 which is a sealing material for an oxygen sensor, a sealing material for a fuel-air ratio sensor, a turbo-charger hose or a hose for control of exhaust gas recirculation combustion equipment.

5. A process for preparing a curable composition comprising:
(A) a vinylidene fluoride type elastomer which is a copolymer of vinylidene fluoride (a1), at least one perfluoroolefin (a2) selected from the group consisting of tetrafluoroethylene, hexafluoropropylene and perfluoro(alkyl vinyl ether) and a cyano group-containing monomer (a3) (a proportion of the vinylidene fluoride exceeds 20 % by mole),
(B) at least one curing agent selected from the group consisting of a compound having at least two crosslinkable reaction groups represented by the formula (1): 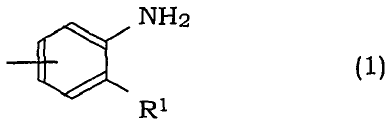 wherein R¹s are the same or different and each is -NH₂, -NHR², -OH or
- SH; R² is a fluorine atom or a monovalent organic group,
a compound represented by the formula (2): 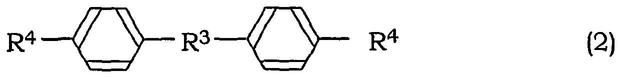 wherein R³ is -SO₂-, -O-, -CO-, an alkylene group having 1 to 6 carbon atoms, a perfluoroalkylene group having 1 to 10 carbon atoms or a single bond; R⁴ is 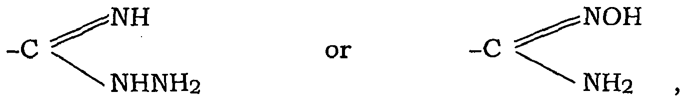 a compound represented by the formula (3): 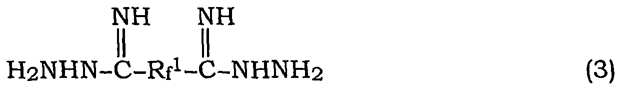 in which R_{f}¹ is a perfluoroalkylene group having 1 to 10 carbon atoms, and a compound represented by the formula (4): 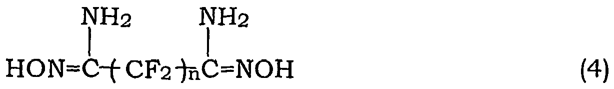 in which n is an integer of 1 to 10, and
(C) a compound generating ammonia at 40° to 330°C,
said process being **characterized in that** the compound (C) generating ammonia is mixed with the other components in the presence of a solvent (E) having affinity for the compound (C) generating ammonia.

6. The preparation process of Claim 5, wherein the compound (C) generating ammonia is urea or an ammonium salt.

7. The preparation process of Claim 5 or 6, wherein the solvent (E) is water or an organic solvent having affinity for the compound (C) generating ammonia.

## Patentansprüche

1. Härtbare Zusammensetzung, umfassend:
(A) ein Elastomer vom Vinylidenfluorid-Typ, das ein Vinylidenfluorid-Copolymer (a1), zumindest ein Perfluorolefin (a2), ausgewählt aus der Gruppe bestehend aus Tetrafluorethylen, Hexafluorpropylen und Perfluor(alkylvinylether), und ein Cyanogruppen enthaltendes Monomer (a3) ist (der Anteil an Vinylidenfluorid übersteigt 20 mol-%),
(B) zumindest ein Härtungsmittel, ausgewählt aus der Gruppe bestehend aus
einer Verbindung mit zumindest zwei vernetzbaren Reaktionsgruppen der Formel (1): 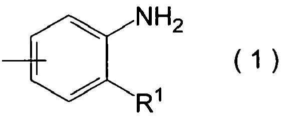 worin die R¹ gleich oder verschieden sind und jeweils -NH₂, -NHR², -OH oder -SH sind und R² ein Fluoratom oder eine monovalente organische Gruppe ist,
einer Verbindung der Formel (2): 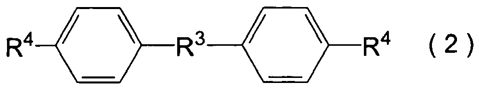 worin R³ -SO₂-, -O-, -CO-, eine Alkylengruppe mit 1 bis 6 Kohlenstoffatomen, eine Perfluoralkylengruppe mit 1 bis 10 Kohlenstoffatomen oder eine Einfachbindung ist und R⁴ 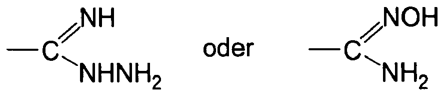 ist,
einer Verbindung der Formel (3): 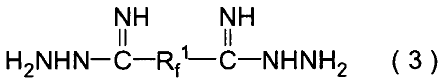 worin R_{f}¹ eine Perfluoralkylengruppe mit 1 bis 10 Kohlenstoffatomen ist, und
einer Verbindung der Formel (4): 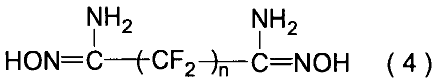 worin n eine ganze Zahl von 1 bis 10 ist, und
(C) eine Verbindung, die bei 40 bis 330°C Ammoniak erzeugt.

2. Härtbare Zusammensetzung gemäss Anspruch 1, wobei die Ammoniak erzeugende Verbindung (C) Harnstoff oder ein Ammoniumsalz ist.

3. Geformter Artikel, der durch Härten einer härtbaren Zusammensetzung gemäss Anspruch 1 oder 2 erhalten wird.

4. Geformter Artikel gemäss Anspruch 3, der ein Dichtungsmaterial für einen Sauerstoffsensor, ein Dichtungsmaterial für einen Kraftstoff/LuftVerhältnis-Sensor, ein Turboladerschlauch oder ein Schlauch zur Steuerung der Abgasrückführungs-Verbrennungsanlage ist.

5. Verfahren zur Herstellung einer härtbaren Zusammensetzung, umfassend:
(A) ein Elastomer vom Vinylidenfluorid-Typ, das ein Vinylidenfluorid-Copolymer (a1), zumindest ein Perfluorolefin (a2), ausgewählt aus der Gruppe bestehend aus Tetrafluorethylen, Hexafluorpropylen und Perfluor(alkylvinylether), und ein Cyanogruppen enthaltendes Monomer (a3) ist (der Anteil an Vinylidenfluorid übersteigt 20 mol-%),
(B) zumindest ein Härtungsmittel, ausgewählt aus der Gruppe bestehend aus
einer Verbindung mit zumindest zwei vernetzbaren Reaktionsgruppen der Formel (1): 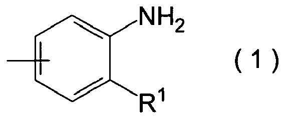 worin die R¹ gleich oder verschieden sind und jeweils -NH₂, -NHR², -OH oder -SH sind und R² ein Fluoratom oder eine monovalente organische Gruppe ist,
einer Verbindung der Formel (2): 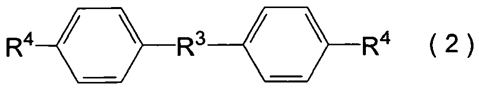 worin R³ -SO₂-, -O-, -CO-, eine Alkylengruppe mit 1 bis 6 Kohlenstoffatomen, eine Perfluoralkylengruppe mit 1 bis 10 Kohlenstoffatomen oder eine Einfachbindung ist und R⁴ 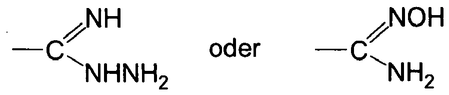 ist,
einer Verbindung der Formel (3): 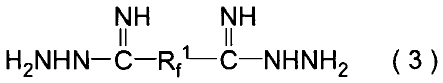 worin R_{f}¹ eine Perfluoralkylengruppe mit 1 bis 10 Kohlenstoffatomen ist, und
einer Verbindung der Formel (4): 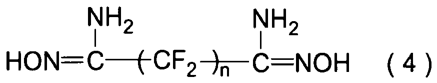 worin n eine ganze Zahl von 1 bis 10 ist, und
(C) eine Verbindung, die bei 40 bis 330°C Ammoniak erzeugt,
wobei das Verfahren **dadurch gekennzeichnet ist, dass** die Ammoniak erzeugende Verbindung (C) mit einer anderen Komponente in Gegenwart eines Lösungsmittels (E), das eine Affinität zur Ammoniak erzeugenden Verbindung (C) aufweist, vermischt wird.

6. Herstellungsverfahren gemäss Anspruch 5, wobei die Ammoniak erzeugende Verbindung (C) Harnstoff oder ein Ammoniumsalz ist.

7. Herstellungsverfahren gemäss Anspruch 5 oder 6, wobei. das Lösungsmittel (E) Wasser oder ein organisches Lösungsmittel mit Affinität zur Ammoniak erzeugenden Verbindung (C) ist.

## Revendications

1. Composition durcissable comprenant :
(A) un élastomère de type fluorure de vinylidène qui est copolymère de fluorure de vinylidène (a1), d'au moins une oléfine perfluorée (a2) choisie parmi le groupe consistant en le tétrafluoroéthylène, l'hexafluoropropylène et un perfluoro(éther alkylvinylique) et un monomère contenant un groupe cyano (a3) (une proportion du fluorure de vinylidène excède 20% par mole),
(B) au moins un agent de durcissement choisi parmi le groupe consistant en un composé ayant au moins deux groupes de réaction réticulables représentés par la formule (1) : 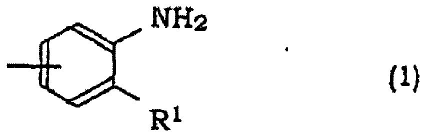 dans laquelle les R¹ sont identiques ou différents et chacun est -NH₂, -NHR², -OH ou -SH ; R² est un atome de fluor ou un groupe organique monovalent,
un composé représenté par la formule (2) : 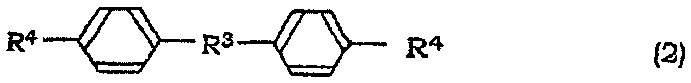 dans laquelle R³ est -SO₂-, -O-, -CO-, un groupe alkylène ayant 1 à 6 atomes de carbone, un groupe perfluoroalkylène ayant 1 à 10 atomes de carbone ou une liaison simple ; R⁴ est 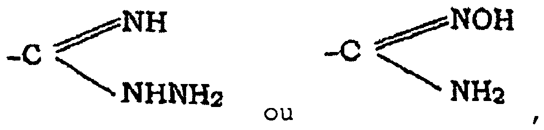 un composé représenté par la formule (3) : 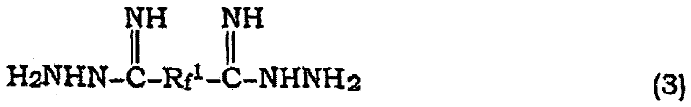 dans laquelle R_{f}¹ est un groupe perfluoroalkylène ayant 1 à 10 atomes de carbone,
et un composé représenté par la formule (4) : 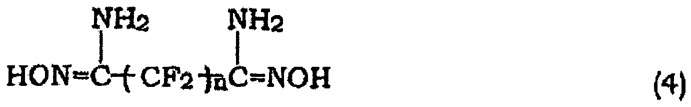 dans laquelle n est un entier de 1 à 10, et
(C) un composé générant de l'ammoniac à 40° à 330°C.

2. Composition durcissable selon la revendication 1, dans laquelle le composé (C) générant de l'ammoniac est l'urée ou un sel d'ammonium.

3. Article moulé obtenu par durcissement de la composition durcissable selon la revendication 1 ou 2.

4. Article moulé selon la revendication 3 qui est un matériau d'étanchéité pour un capteur d'oxygène, un matériau d'étanchéité pour un capteur de rapport aircarburant, un tuyau pour un turbocompresseur ou un tuyau pour le contrôle d'un équipement de recirculation et de combustion de gaz d'échappement.

5. Procédé de préparation d'une composition durcissable comprenant :
(A) un élastomère de type fluorure de vinylidène qui est copolymère de fluorure de vinylidène (a1), d'au moins une oléfine perfluorée (a2) choisie parmi le groupe consistant en le tétrafluoroéthylène, l'hexafluoropropylène et un perfluoro(éther alkylvinylique) et un monomère contenant un groupe cyano (a3) (une proportion du fluorure de vinylidène excède 20% par mole),
(B) au moins un agent de durcissement choisi parmi le groupe consistant en un composé ayant au moins deux groupes de réaction réticulables représentés par la formule (1) : 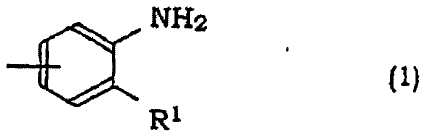 dans laquelle les R¹ sont identiques ou différents et chacun est -NH₂, -NHR², -OH ou -SH ; R² est un atome de fluor ou un groupe organique monovalent,
un composé représenté par la formule (2) : 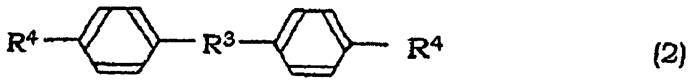 dans laquelle R³ est -SO₂-, -O-, -CO-, un groupe alkylène ayant 1 à 6 atomes de carbone, un groupe perfluoroalkylène ayant 1 à 10 atomes de carbone ou une liaison simple ; R⁴ est 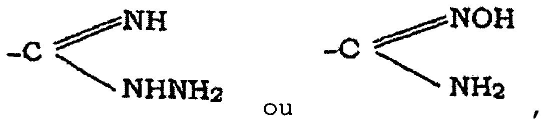 un composé représenté par la formule (3) : 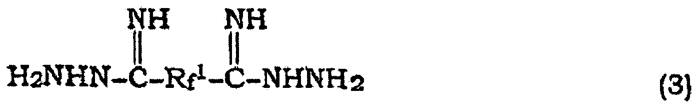 dans laquelle R_{f}¹ est un groupe perfluoroalkylène ayant 1 à 10 atomes de carbone,
et un composé représenté par la formule (4) : 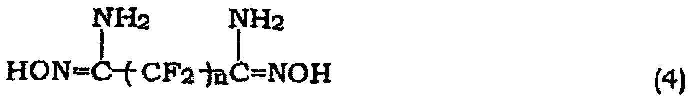 dans laquelle n est un entier de 1 à 10, et
(C) un composé générant de l'ammoniac à 40° à 330°C,
ledit procédé étant **caractérisé en ce que** le composé (C) générant de l'ammoniac est mélangé avec les autres composants en présence d'un solvant E ayant une affinité pour le composé (C) générant de l'ammoniac.

6. Procédé de préparation selon la revendication 5, dans lequel le composé (C) générant de l'ammoniac est l'urée ou un sel d'ammonium.

7. Procédé de préparation selon la revendication 5 ou 6, dans lequel le solvant (E) est l'eau ou un solvant organique ayant une affinité pour le composé (C) générant de l'ammoniac.
